# EUROPEAN PATENT APPLICATION

(11) **EP 3 951 455 A1**
(43) Date of publication of application: **09.02.2022**
(21) Application number: 20785274.0
(22) Date of filing: 11.03.2020
(51) Int. Cl.: G02B 5/30, B32B 7/023, B32B 17/10, G02F 1/1335

(54) **OPTICAL FILM SET AND OPTICAL LAYERED BODY**

(30) Priority: 29.03.2019 JP 2019066163
(71) Applicant: Nitto Denko Corporation, Ibaraki-shi, Osaka 567-8680 (JP)
(72) Inventor: MURASHIGE, Takeshi, Ibaraki-shi, Osaka 567-8680 (JP); INAGAKI, Junichi, Ibaraki-shi, Osaka 567-8680 (JP); SATO, Keisuke, Ibaraki-shi, Osaka 567-8680 (JP); KISHI, Atsushi, Ibaraki-shi, Osaka 567-8680 (JP)
(74) Representative: Hoffmann Eitle
(86) International application number: PCT/JP2020/010588
(87) International publication number: WO 2020/203128

(57) **Abstract**

An optical film set includes a first optical film provided with a first gluing agent layer and disposed on a viewing side of an optical element via the first gluing agent layer; and a second optical film provided with a second gluing agent layer and disposed on a rear surface side of the optical element via the second gluing agent layer. A first glass film having a thickness of 50 µm or more and 150 µm or less is disposed on a viewing side surface of the first optical film. A thickness of the second gluing agent layer is 50 µm or more and 200 µm or less.

## Description

### [Technical Field]

The present invention relates to optical film sets and an optical layered body.

### [Background Art]

Recently, in recent years, liquid crystal cells equipped with touch sensor functions on screens have been used in a wide range of fields from mobile phones to information displays.

The liquid crystal cells include, for example, a display panel, in which a film or glass having a sensor function is laminated on a polarizing plate, and a tempered glass called as a front plate is disposed on an outermost layer via an adhesive layer for filling a level difference of a sensor surface. Moreover, recently, liquid crystal panels called as in-cells in which touch sensors are incorporated in glass substrates of liquid crystal cells from a viewpoint of reduction of thickness or reduction of weight have appeared.

On the other hand, reduction of thickness of tempered glass has also advanced. However, the reduction of thickness of tempered glass is limited because when the thickness of the tempered glass is 300 µm or less, the tempered glass may perform selfdestruction due to its compression stress. In view of the situation, an increase of hardness of the front plate has been studied using resins. However, sufficient hardness has not been actually obtained.

Thus, thin glass films have attracted attention as the front plates of liquid crystal cells. The glass film is integrated with the polarizing plate via, for example, the adhesive layer.

### [Prior art document]

### [Patent Documents]

Patent Document 1: WO 2013/175767

### [Summary of Invention]

### [Problem to be solved by the invention]

However, because a thickness of a glass film disposed on a surface of a viewing side of an optical element, such as a liquid crystal cell, is very thin, being within a range from 50 µm to 150 µm, there is a problem that the glass film may be easily broken by shock.

The present invention has been made in view of the above-described problem, and aims at providing an optical film set in which it is possible to improve resistance to cracking of a glass film disposed on a viewing side of an optical element.

### [Means for Solving Problems]

According to an aspect of the present invention, an optical film set includes a first optical film provided with a first gluing agent layer and disposed on a viewing side of an optical element via the first gluing agent layer; and a second optical film provided with a second gluing agent layer and disposed on a rear surface side of the optical element via the second gluing agent layer, a first glass film having a thickness of 50 µm or more and 150 µm or less being disposed on a viewing side surface of the first optical film, and a thickness of the second gluing agent layer being 50 µm or more and 200 µm or less.

### [Effects of the Invention]

According to the disclosed technique, an optical film set that can improve resistance to cracking of the glass film disposed on the viewing side of the optical element can be provided.

### [Brief Description of Drawings]

[Figure 1] FIG. 1 is a cross-sectional view illustrating an example of an optical film set according to a first embodiment.
[Figure 2] FIG. 2 is a cross-sectional view illustrating an example of an optical film set according to a second embodiment.
[Figure 3] FIG. 3 is a cross-sectional view illustrating an example of an optical layered body according to a third embodiment.
[Figure 4] FIG. 4 is a cross-sectional view illustrating an example of an optical layered body according to a fourth embodiment.
[Figure 5] FIG. 5 is a diagram illustrating a ball drop test.
[Figure 6] FIG. 6 is a diagram describing practical examples.
[Figure 7] FIG. 7 is a diagram describing comparative examples.

### [Mode for Carrying Out the Invention]

In the following, an embodiment for carrying out the invention will be described with reference to the drawings. In each drawing, the same reference numerals are assigned to the same components, respectively, and overlapping descriptions may be omitted.

### <First embodiment>

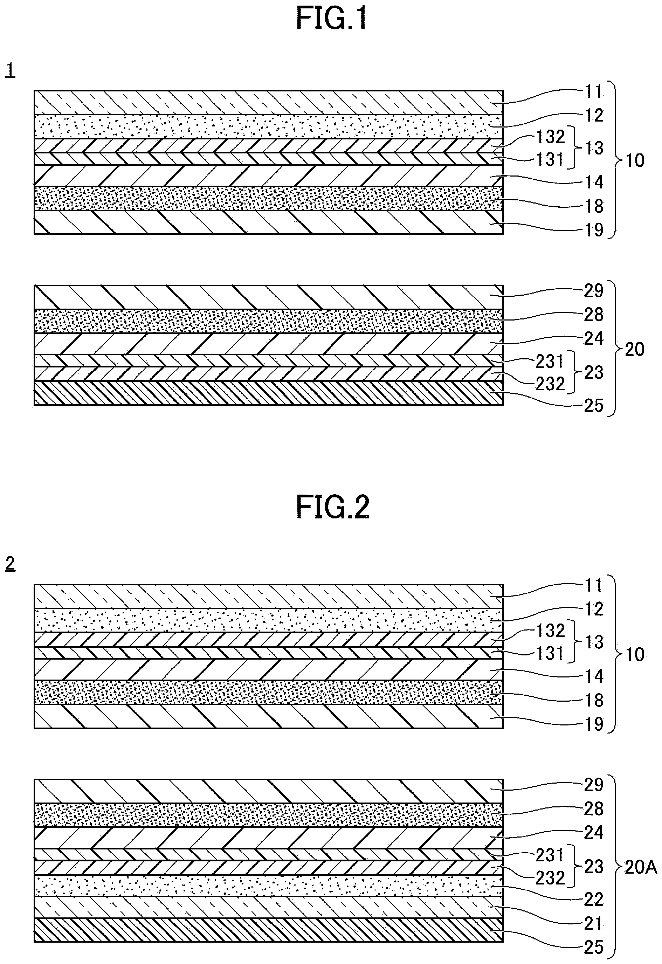

FIG. 1 is a cross-sectional view illustrating an example of an optical film set according to a first embodiment. Referring to FIG. 1, the optical film set 1 includes a first optical film 10 and a second optical film 20.

The first optical film 10 includes, in this order, a first glass film 11, a first adhesive layer 12, a first polarizing plate 13, a first phase difference layer 14, a first gluing agent layer 18, and a first release film 19. However, the first phase difference layer 14 is not an essential configuration, but is provided as needed.

In the specification of the present application, the gluing agent layer refers to a layer that has adhesiveness at a room temperature, and can adhere to an adherend member with a light pressure. Accordingly, when the adherend member adhered to the gluing agent layer is peeled off from the gluing agent layer, the gluing agent layer retains a practical adhesive strength. On the other hand, the adhesive layer refers to a layer that sticks two layers together. Thus, when an adherend member adhered to the adhesive layer is peeled off, the adhesive layer does not have a practical adhesive strength.

The first polarizing plate 13 has a first polarizer 131 and a first protection film 132. The first protection film 132 is disposed on at least one side of the first polarizer 131. The first protection film 132 is preferably disposed at least on the first adhesive layer 12 side of the first polarizer 131, but may be disposed on both sides of the first polarizer 131 as needed.

The first phase difference layer 14 is disposed on a side of the first polarizing plate 13 opposite to the first adhesive layer 12. The first phase difference layer 14 may be laminated on the first polarizing plate 13 via any suitable gluing agent layer or adhesive layer (not shown).

The first release film 19 is disposed on a side of the first phase difference layer 14 opposite to the first polarizing plate 13 via the first gluing agent layer 18.

The second optical film 20 includes, in this order, a second release film 29, a second gluing agent layer 28, a second phase difference layer 24, a second polarizing plate 23, and an optical layer 25. However, the second phase difference layer 24 and the optical layer 25 are not essential configurations, but are provided as needed.

The second polarizing plate 23 has a second polarizer 231. The second polarizing plate 23 may optionally include a second protection film 232 disposed on one side of or on both sides of the second polarizer 231.

The second phase difference layer 24 may be laminated on the second polarizing plate 23 via any suitable gluing agent layer or adhesive layer (not shown).

The optical layer 25 may be disposed on both sides of the second polarizing plate 23 as needed. When the second polarizing plate 23 is provided with the second protection film 232, the optical layer 25 is preferably disposed on the side of the second protection film 232 opposite to the second polarizer 231. The optical layer 25 can be laminated on the second polarizing plate 23 via any suitable gluing agent layer or adhesive layer (not shown).

In the following, each component of the optical film set 1 will be described in detail.

### (First optical film)

### [First glass film]

The first glass film 11 is not particularly limited, and an appropriate material may be selected according to the purpose. According to the classification regarding the composition, the first glass film 11 includes, for example, soda lime glass, borate glass, aluminosilicate glass, and quartz glass. Moreover, according to the classification regarding the alkaline component, the first glass film 11 includes, for example, alkalifree glass and low alkali glass. The content of the alkaline metal component of the above-described glass (e.g. Na₂O, K₂O, Li₂O) is preferably 15 wt.% or less, and more preferably 10 wt.% or less.

The thickness of the first glass film 11 is preferably within a range from 50 µm to 150 µm, more preferably within a range from 60 µm to 140 µm, further preferably within a range from 70 µm to 130 µm, and especially preferably within a range from 80 µm to 120 µm. When the thickness is within the above-described ranges, the first optical film 10 which is excellent in flexibility, possible to be processed by a roll-to-roll process, and excellent in productivity according to the robustness of the glass film is obtained.

The light transmittance of the first glass film 11 at the wavelength of 550 nm is preferably 85% or more. The refractive index of the first glass film 11 at the wavelength of 550 nm is preferably within a range from 1.4 to 1.65.

The density of the first glass film 11 is preferably within a range from 2.3 g/cm³ to 3.0 g/cm³, and more preferably within a range from 2.3 g/cm³ to 2.7 g/cm³. When the density is within the above-described ranges, it is possible to provide the optical film set 1 which can contribute to the reduction of the weight of the image display device.

The molding method of the first glass film 11 is not particularly limited, and an appropriate method can be selected according to the purpose. Typically, the first glass film 11 can be prepared by melting a mixture containing a main raw material such as silica or alumina, a defoaming agent such as mirabilite or antimony oxide, and a reducing agent such as carbon, at a temperature within a range from 1400°C to 1600°C, forming into a shape of a sheet, and cooling the mixture. Suitable methods of the first glass film 11 may include, for example, a slot down draw method, a fusion method, and a float method. The glass film formed into a plate shape according to the above-described method, may be chemically polished with a solvent such as fluoric acid, as necessary, in order to make thinner or enhance the smoothness.

### [First adhesive layer]

The first adhesive layer 12 is not particularly limited, and an appropriate adhesive may be used according to the purpose. Suitable adhesives may include, for example, polyester-based adhesives, polyurethane-based adhesives, polyvinyl alcohol-based adhesives, and epoxy-based adhesives. Among the above described adhesives, an epoxy-based adhesive having particularly excellent adhesiveness is preferable.

When the first adhesive layer 12 includes a thermosetting adhesive, a peel resistance is exhibited by being heated. Moreover, when the first adhesive layer 12 includes a photocurable adhesive such as an ultra-violet curable type adhesive, the peel resistance is exhibited by being irradiated with light such as ultra-violet light. In addition, when the first adhesive layer 12 includes a moisture-curable adhesive, the adhesive layer can be cured according to the reaction with moisture or the like in the air. Thus, the peel resistance is exhibited also by being left as it is.

For the first adhesive layer 12, for example, a commercially available adhesive may be used. Various curable resins may be dissolved or dispersed in a solvent so as to be prepared as an adhesive solution or a dispersion.

The thickness of the first adhesive layer 12 is preferably less than or equal to 10 µm, more preferably within a range from 0.1 µm to 10 µm, further preferably within a range from 0.5 µm to 8 µm, and especially preferably within a range from 1 µm to 6 µm. When the thickness is within the above-described ranges, it is possible to obtain the first optical film 10 which is excellent in flexibility and excellent in puncture resistance.

The elastic modulus of the first adhesive layer 12 is preferably within a range from 0.5 GPa to 15 GPa, more preferably within a range from 0.8 GPa to 10 GPa, and further preferably within a range from 1 GPa to 5 GPa. When the elastic modulus is within the above-described ranges, it is possible to obtain the first optical film 10 which is excellent in flexibility and excellent in puncture resistance. In the specification of the present disclosure, the elastic modulus can be measured under the following conditions.

### [Elastic modulus measurement method]

Measurement temperature is 23°C.

Sample size is 2 cm in width and 15 cm in length.

Distance between chucks is 10 cm.

Tensile speed is 10 mm/min.

### [First polarizing plate]

The thickness of the first polarizing plate 13 is preferably within a range from 5 µm to 300 µm, more preferably within a range from 10 µm to 250 µm, further preferably within a range from 25 µm to 200 µm, and especially preferably within a range from 25 µm to 100 µm.

The elastic modulus of the first polarizing plate 13 is preferably greater than or equal to 1 GPa, more preferably within a range from 1 GPa to 10 GPa, further preferably within a range from 2 GPa to 7 GPa, and especially preferably within a range from 2 GPa to 5 GPa. When the elastic modulus is within the above-described ranges, it is possible to obtain the first optical film 10 that is excellent in puncture resistance.

The shape of the first polarizing plate 13 is not particularly limited, and an appropriate shape may be selected according to the purpose. For example, the shape includes a rectangular shape having a longer side and a shorter side. When the first polarizing plate 13 has a rectangular shape, the absorption axis direction of the first polarizer 131 of the first polarizing plate 13 is preferably substantially parallel to the longer side or the shorter side of the first polarizing plate 13. In the specification of the present application, the term "substantially parallel" is a concept including not only the case of strictly being parallel but also the case where the angle formed by two lines are ±10° (preferably ±5°).

### [First polarizer]

The thickness of the first polarizer 131 is not particularly limited, and an appropriate thickness may be selected according to the purpose. Typically, the thickness of the first polarizer 131 is about within a range from 1 µm to 80 µm. A thin polarizer may be used for the first polarizer 131. In this case, the thickness of the first polarizer 131 is preferably less than or equal to 20 µm, more preferably less than or equal to 15 µm, further preferably less than or equal to 10 µm, and especially preferably less than or equal to 6 µm.

The first polarizer 131 preferably exhibits absorption dichroism at any wavelength within the range from 380 nm to 780 nm. The single body transmittance of the first polarizer 131 is preferably greater than or equal to 40.0%, more preferably greater than or equal to 41.0%, further preferably greater than or equal to 42.0%, and especially preferably greater than or equal to 43.0%. The polarization degree of the first polarizer 131 is preferably greater than or equal to 99.8%, more preferably greater than or equal to 99.9%, and further preferably greater than or equal to 99.95%.

The first polarizer 131 is preferably an iodine-based polarizer. More specifically, the above-described polarizer can be configured by a polyvinyl alcohol-based resin (hereinafter, referred to as a "PVA-based resin") film containing iodine.

The PVA resin forming the PVA-based resin film is not particularly limited, and an appropriate resin may be selected according to the purpose. Suitable PVA resins may include, for example, polyvinyl alcohol or ethylene-vinyl alcohol copolymer.

Polyvinyl alcohol is obtained by saponifying polyvinyl acetate. Ethylene-vinyl alcohol copolymer is obtained by saponifying ethylene-vinyl acetate copolymer. The saponification degree of the PVA-based resin is typically within a range from 85 mol% to 100 mol%, preferably within a range from 95.0 mol% to 99.95 mol%, and further preferably within a range from 99.0 mol% to 99.93 mol%. The saponification degree is determined in accordance with JIS K 6726-1994.

By using the PVA-based resin with the above-described saponification degree, it is possible to obtain the polarizer excellent in durability. If the saponification degree is too high, the resin may be gelated.

The average degree of polymerization of the PVA-based resin is not particularly limited, and can be appropriately selected according to the purpose. The average degree of polymerization of the PVA-based resin is, for example, within a range from 1000 to 10000, preferably within a range from 1200 to 5000, and further preferably within a range from 1500 to 4500. The average degree of polymerization is determined in accordance with JIS K 6726-1994.

The method of manufacturing the first polarizer 131 includes, for example, a method of stretching and dyeing a PVA-based resin film alone (I), and a method of stretching and dyeing a layered body (i) having a resin substrate and a polyvinyl alcohol-based resin layer (II). The method (I) is a well-known method in the art, and will not be described in detail.

The method (II) preferably includes a step of stretching and dyeing the layered body (i) having a resin substrate and a polyvinyl alcohol-based resin layer formed on one side of the resin substrate to prepare a polarizer on the resin substrate. The layered body (i) can be formed by applying an application liquid containing the polyvinyl alcohol-based resin on the resin substrate and drying the liquid. Moreover, the layered body (i) may also be formed by transferring a polyvinyl alcohol-based resin layer onto the resin substrate. Details of the above-described method (II) are disclosed in, for example, Japanese unexamined patent application publication No. 2012-73580, which can be incorporated in the specification by reference.

### [First protection film]

The first protection film 132 is not particularly limited, and an appropriate resin film may be used according to the purpose. Suitable formation materials of the first protection film 132 may include, for example, a polyester-based resin, such as polyethylene terephthalate (PET); a cellulosic resin, such as triacetyl cellulose (TAC); a cycloolefin-based resin, such as a norbornenebased resin; an olefin-based resin, such as polyethylene and polypropylene; and a (meth) acrylic resin. Among them, polyethylene terephthalate (PET) is preferable. In addition, "(meth) acrylic resin" refers to an acrylic resin and/or a methacrylic resin.

For the (meth) acrylic resin, for example, a (meth) acrylic resin having a glutarimide structure is used. The (meth) acrylic resin having a glutarimide structure (in the following, also referred to as a glutarimide resin) is disclosed, for example, in Japanese unexamined patent application publication No. 2006-309033, Japanese unexamined patent application publication No. 2006-317560, Japanese unexamined patent application publication No. 2006-328329, Japanese unexamined patent application publication No. 2006-328334, Japanese unexamined patent application publication No. 2006-337491, Japanese unexamined patent application publication No. 2006-337492, Japanese unexamined patent application publication No. 2006-337493, Japanese unexamined patent application publication No. 2006-337569, Japanese unexamined patent application publication No. 2007-009182, Japanese unexamined patent application publication No. 2009-161744, and Japanese unexamined patent application publication No. 2010-284840. These descriptions can be incorporated in the specification as references.

The first protection film 132 and the first polarizer 131 can be laminated via any appropriate adhesive layer. The resin substrate used in the preparation of the first polarizer 131 is peeled off before or after laminating the first protection film 132 and the first polarizer 131.

The thickness of the first protection film 132 is preferably within a range from 4 µm to 250 µm, more preferably within a range from 5 µm to 150 µm, further preferably within a range from 10 µm to 100 µm, and especially preferably within a range from 10 µm to 50 µm.

The elastic modulus of the first protection film 132 is greater than or equal to 1 GPa, preferably within a range from 1 GPa to 10 GPa, more preferably within a range from 1.8 GPa to 7 GPa, and further preferably within a range from 2 GPa to 5 GPa. When the elastic modulus is within the above-described ranges, the first optical film 10 which is excellent in puncture resistance can be obtained.

### [First phase difference layer]

The first phase difference layer 14 is not particularly limited and may have any suitable optical characteristics and/or mechanical characteristics according to the purpose. The first phase difference layer 14 typically has a slow axis. The optical characteristics and/or the mechanical characteristics of the first phase difference layer 14 can be appropriately selected according to an orientation mode of the liquid crystal cell.

The first phase difference layer 14 may exhibit a reverse wavelength dispersion characteristic showing that the phase difference value increases with a wavelength of measurement light, a positive wavelength dispersion characteristic showing that the phase difference value decreases with the wavelength of measurement light, or a flat wavelength dispersion characteristic showing that the phase difference value is almost unchanged by the wavelength of measurement light.

The thickness of the first phase difference layer 14 is preferably 60 µm or less, more preferably within a range from 30 µm to 55 µm, and further preferably 30 µm or less.

The first phase difference layer 14 can be formed of any suitable resin film that satisfies the above-described characteristics. Suitable resins may include, for example, a cyclic olefin-based resin, a polycarbonate-based resin, a cellulosebased resin, a polyester-based resin, a polyvinyl alcohol-based resin, a polyamide-based resin, a polyimide-based resin, a polyether-based resin, a polystyrene-based resin, an acrylic-based resin, and a polymer liquid crystal resin.

### [First gluing agent layer]

The first gluing agent layer 18 is formed of any appropriate gluing agent. For the gluing agent, for example, a gluing agent in which an acrylic polymer, a silicone-based polymer, polyester, polyurethane, polyamide, polyether, a fluorine-based polymer or a rubber-based polymer is used as a base polymer is used. Among them, an acrylic gluing agent is preferably used, because the acrylic gluing agent has excellent optical transparency, and exhibits an appropriate gluing characteristic of wettability, cohesiveness, and adhesiveness, and thereby is excellent in weather resistance and heat resistance. An acrylic gluing agent containing an acrylic polymer having 4 to 12 carbon atoms is especially preferable.

The first gluing agent layer 18 is formed of the above-described gluing resin. The thickness of the first gluing agent layer 18 is not particularly limited, and, for example, is within a range from 1 µm to 400 µm. In addition, the range of the thickness of the first gluing agent layer 18 can be appropriately determined according to the method of manufacturing a (meth)acrylic polymer used for the gluing agent. For example, when a (meth)acrylic polymer is manufactured by the solution polymerization method or the like, the thickness of the first gluing agent layer 18 is preferably within a range from 1 µm to 100 µm, more preferably within a range from 2 µm to 50 µm, further preferably within a range from 2 µm to 40 µm, and particularly preferably within a range from 5 µm to 35 µm. When a (meth)acrylic polymer is manufactured by the radiation polymerization method or the like, the thickness of the first gluing agent layer 18 is preferably within a range from 50 µm to 400 µm, more preferably within a range from 75 µm to 300 µm, and further preferably within a range from 100 µm to 200 µm.

For manufacturing acrylic polymers having the above-described thickness, the solution polymerization method is preferably employed.

### [First release film]

The first release film 19 may be formed of, for example, polyethylene terephthalate (PET) resin. The thickness of the first release film 19 is preferably within a range from 5 µm to 200 µm, more preferably within a range from 10 µm to 100 µm, and further preferably within a range from 30 µm to 50 µm. The first release film 19 is peeled off at an interface with the first gluing agent layer 18 before the first optical film 10 is stuck onto an optical element such as a liquid crystal cell.

### (Second optical film)

A dimensional change of the second optical film 20 is preferably 0.5% or less, and more preferably within a range from 0% to 0.2%. The optical film set 1 is a combination of the first optical film 10 provided with the first glass film 11 and the second optical film 20 exhibiting the above-described dimensional change. Therefore, by arranging the first optical film 10 and the second optical film 20 on both sides of the liquid crystal cell, respectively, the optical layered body having small warpage (first optical film/liquid crystal cell/second optical film) is obtained.

The dimensional change refers to a dimensional change rate (|(length in the absorption axis direction before the test X₀) - (length in the absorption axis direction after the test X₁)| / length in the absorption axis direction before the test X₀) × 100 when a rectangular-shaped sample having the length of X₀ (for example, 20 cm) in the absorption axis direction of the second polarizer 231 is placed in an environment at a temperature of 80°C for 150 hours. The dimensional changes can be measured by using a plane biaxial length measuring machine, for example, Quick Vision by Mitutoyo Corp.

### [Second release film]

The second release film 29 may be formed of, for example, polyethylene terephthalate (PET) resin. The thickness of the second release film 29 is preferably within a range from 5 µm to 200 µm, more preferably within a range from 10 µm to 100 µm, and further preferably within a range from 30 µm to 50 µm. The second release film 29 is peeled off at an interface with the second gluing agent layer 28 before the second optical film 20 is stuck onto an optical element such as a liquid crystal cell.

### [Second gluing agent layer]

The second gluing agent layer 28 may be formed of any suitable gluing agent. The gluing agent may be the same as the first gluing agent layer 18, except for the thickness of the first gluing agent layer 18.

The thickness of the second gluing agent layer 28 is 50 µm or more and 200 µm or less. If the thickness of the second gluing agent layer 28 is 50 µm or more and 200 µm or less, the resistance to cracking of the first glass film 11 can be improved when an optical layered body 3, described below, is formed. In particular, when the thickness of the first glass film 11 is 50 µm or more and 150 µm or less, the first glass film 11 is thin and easily broken. Thus, it is highly significant that the thickness of the second gluing agent layer 28 is 50 µm or more and 200 µm or less, thereby improving the resistance to cracking of the first glass film 11.

For manufacturing acrylic polymers having the above-described thickness, the radiation polymerization method is preferably employed.

### [Second polarizer]

The thickness of the second polarizing plate 23 is preferably within a range from 5 µm to 250 µm, more preferably within a range from 10 µm to 200 µm, further preferably within a range from 25 µm to 200 µm, and especially preferably within a range from 25 µm to 100 µm.

The shape of the second polarizing plate 23 is not particularly limited, and an appropriate shape may be selected according to the purpose. For example, the shape includes a rectangular shape having a longer side and a shorter side. When the second polarizing plate 23 has a rectangular shape, the absorption axis direction of the second polarizer 231 of the second polarizing plate 23 is preferably substantially parallel to the longer side or the shorter side of the second polarizing plate 23.

A relationship between the second polarizing plate 23 and the first polarizing plate 13 includes, for example, that the absorption axis direction of the first polarizer 131 is substantially parallel to the shorter side of the first polarizer 13, and the absorption axis of the second polarizer 231 is substantially parallel to the longer side of the second polarizing plate 23.

Another example of the relationship between the second polarizing plate 23 and the first polarizing plate 13 includes that the absorption axis direction of the first polarizer 131 is substantially parallel to the longer side of the first polarizer 13, and the absorption axis of the second polarizer 231 is substantially parallel to the shorter side of the second polarizing plate 23.

### [Second polarizer]

The thickness of the second polarizer 231 is within a range from 1 µm to 10 µm, and preferably within a range from 2 µm to 7 µm. When the thickness of the second polarizer 231 is within the above-described range, the second optical film 20 having small dimensional change is obtained. By arranging the first optical film 10 and the second optical film 20 on both sides of the liquid crystal cell, respectively, the optical layered body having small warpage (first optical film/liquid crystal cell/second optical film) is obtained.

Regarding a single body transmittance, a material, a manufacturing method, and the like of the second polarizer 231, the same contents of description for the first polarizer 131 may be exemplified.

### [Second protection film]

For the second protection film 232, for example, the same protection film as the first protection film 132 may be used.

### [Second phase difference layer]

For the second phase difference layer 24, for example, a phase difference layer same as or similar to the first phase difference layer 14 may be used.

### [Optical Layer]

The optical layer 25 includes, for example, an anti-reflection layer, an anti-glare layer, and the like. The thickness of the optical layer is, for example, within a range from 1 µm to 200 µm.

In the optical film set 1, the first optical film 10 is a thin glass integrated type polarizing plate provided with the first glass film 11, and thus has a high hardness. Moreover, in the first optical film 10, the first glass film 11 is provided with the first polarizing plate 13 on one side of the first glass film 11, and thereby damage to the first glass film 11 is suppressed and excellent puncture resistance is exhibited. Since a point compression applied to a surface of the first optical film 10 or the first glass film 11 can be effectively released to the first polarizing plate 13 side, excellent puncture resistance is exhibited as described above.

Upon configuring a liquid crystal panel with the first optical film 10 that functions as above, when the first optical film 10 is used as a viewing side polarizing plate and a conventional polarizing plate is used as a rear side polarizing plate, the layered body including the liquid crystal cell and the polarizing plates (first optical film 10/liquid crystal cell/conventional polarizing plate) tends to warp.

By using the optical film set 1 including the first optical film 10 and the second optical film 20 and arranging the first optical film 10 and the second optical film 20 on both sides of the liquid crystal cell, an optical layered body with small warpage (first optical film 10/liquid crystal cell/second optical film 20) is obtained.

This is an effect obtained by using the second optical film 20 for an optical film to be combined with the first optical film 10 having small dimensional change due to humidity and temperature in order to include the first glass film 11, so as to reduce the difference in dimensional change between the first optical film 10 and the second optical film 20.

As described below, the first optical film 10 can be disposed on the viewing side of the liquid crystal cell, and function as a front plate of the liquid crystal panel. On the other hand, the second optical film 20 can be disposed on the rear side of the liquid crystal cell. The viewing side refers to a side facing the viewing direction when the predetermined member is applied to the image display device. Moreover, the rear side is opposite to the viewing side.

The optical film set 1 is preferably used for an in-cell type liquid crystal element, for example. The in-cell type liquid crystal element is a liquid crystal element including a liquid crystal cell provided with a substrate in which a touch sensor is incorporated. In the liquid crystal element, the first optical film 10 is disposed, for example, on the viewing side of the liquid crystal cell, and the second optical film 20 is disposed, for example, on the rear side of the liquid crystal cell. The optical film set 1 is also suitable for an image display device that requires chemical resistance. In this case, in the optical film set 1, the first optical film 10 is used, for example, with the first glass film 11 facing outward.

### <Second embodiment>

In a second embodiment, an example of an optical film set having a different layer structure from that of the first embodiment will be shown. In the second embodiment, description of the same member as that in the embodiment that was already described may be omitted.

FIG. 2 is a cross-sectional view illustrating an example of an optical film set according to the second embodiment. Referring to FIG. 2, the optical film set 2 includes the first optical film 10 and a second optical film 20A. That is, the optical film set 2 is different from the optical film set 1 (See FIG. 1) in that the second optical film 20 is replaced by the second optical film 20A.

The second optical film 20A includes, in this order, a second release film 29, a second gluing agent layer 28, a second phase difference layer 24, a second polarizing plate 23, a second adhesive layer 22, a second glass film 21, and an optical layer 25. However, the second phase difference layer 24 and the optical layer 25 are not essential configurations, but are provided as needed.

The elastic modulus of the second adhesive layer 22 is preferably greater than or equal to 1 GPa, more preferably within a range from 1 GPa to 10 GPa, further preferably within a range from 2 GPa to 8 GPa, and especially preferably within a range from 2 GPa to 5 GPa. When the elastic modulus is within the above-described ranges, it is possible to suppress the dimensional change while maintaining the flexibility.

Regarding a material, a thickness, and the like of the second adhesive layer 22, the same contents of description for the first adhesive layer 12 may be exemplified.

The thickness of the second glass film 21 is preferably within a range from 20 µm to 150 µm, more preferably within a range from 40 µm to 130 µm, and further preferably within a range from 60 µm to 110 µm. When the thickness of the second glass film 21 is within the above-described ranges, the second optical film 20A with excellent flexibility is obtained.

The second glass film 21 may, for example, be thinner than the first glass film 11. This is because a certain degree of strength is required for the first glass film 11 that has direct contact with the outside, whereas for the second glass film 21, a strength for suppressing a dimensional change of a resin and a strength for performing a roll-to-roll process are required.

Regarding a material, transmittance, refractive index, density, a forming method, and the like of the second glass film 21, the same contents of description for the first glass film 11 may be exemplified.

Thus, in the optical film set 2, the second optical film 20A includes the second adhesive layer 22 and the second glass film 21 in addition to the configuration of the second optical film 20. By using the optical film set 2 including the first optical film 10 and the second optical film 20A, and arranging the first optical film 10 and the second optical film 20A on both sides of the liquid crystal cell respectively, an optical layered body with a small warpage (first optical film 10/liquid crystal cell/second optical film 20A) is obtained.

Moreover, the optical film set 2 is preferably used for a liquid crystal cell or an image display device that requires chemical resistance, in the same manner as the optical film set 1.

### <Third embodiment>

In a third embodiment, an example of an optical layered body having the optical film set according to the first embodiment will be shown. In the third embodiment, description of the same member as that in the embodiments that were already described may be omitted.

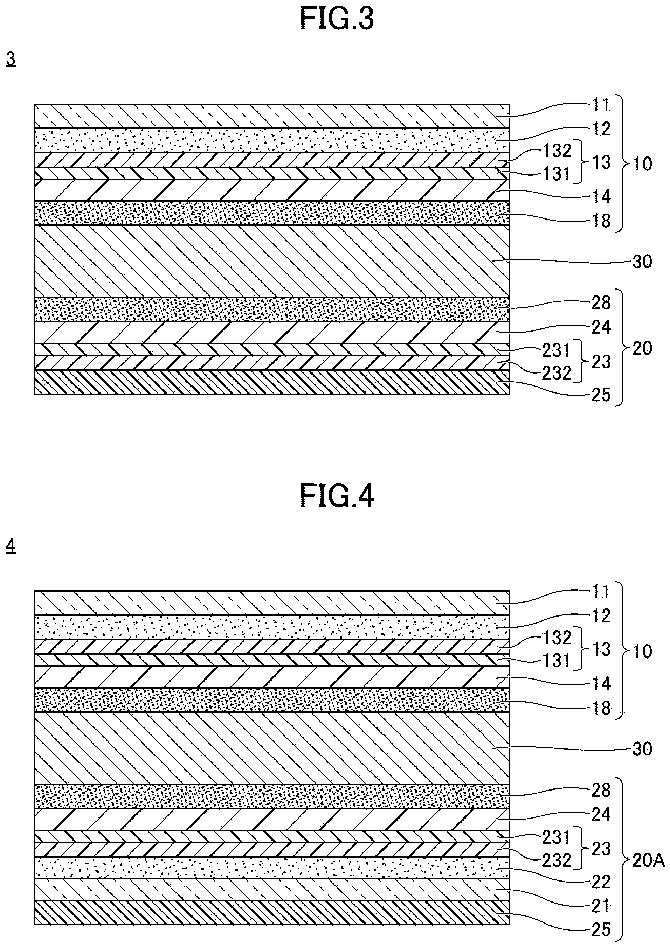

FIG. 3 is a cross-sectional view illustrating an optical layered body according to the third embodiment. Referring to FIG. 3, the optical layered body 3 includes, in this order from the viewing side, the first optical film 10 from which the first release film 19 was peeled off, the liquid crystal cell 30, and the second optical film 20 from which the second release film 29 was peeled off.

That is, in the optical layered body 3, the first optical film 10 is laminated on the viewing side of the liquid crystal cell 30, and the second optical film 20 is laminated on the side opposite to the viewing side (the rear side) of the liquid crystal cell 30.

In the first optical film 10, for example, the first glass film 11, the first adhesive layer 12, the first polarizing plate 13, the first phase difference layer 14, and the first gluing agent layer 18 are arranged in this order from the viewing side. In the second optical film 20, for example, the second gluing agent layer 28, the second phase difference layer 24, the second polarizing plate 23, and the optical layer 25 are arranged in this order from the viewing side. However, as described above, the first phase difference layer 14, the second phase difference layer 24, and the optical layer 25 may be provided as needed.

Thus, by arranging the first optical film 10 and the second optical film 20 on both sides of the liquid crystal cell 30, the optical layered body 3 is obtained.

As described above, the thickness of the second gluing agent layer 28 is greater than or equal to 50 µm and less than or equal to 200 µm. Thus, in the optical layered body 3, the resistance to cracking of the first glass film 11 can be improved. In particular, when the thickness of the first glass film 11 is 50 µm or more and 150 µm or less, the first glass film 11 is thin and easily broken. Thus, it is highly significant that the thickness of the second gluing agent layer 28 is 50 µm or more and 200 µm or less, thereby improving the resistance to cracking of the first glass film 11.

The optical layered body 3 is preferably configured so that the absorption axis of the first polarizer 131 and the absorption axis of the second polarizer 231 are substantially orthogonal to each other. According to the above-described configuration, the optical layered body 3 with small warpage is obtained. "Substantially orthogonal" is a concept that includes not only a case in which two lines are strictly orthogonal but also a case in which two lines form an angle of 90°± 10° (preferably 90°±5°).

### <Fourth embodiment>

In a fourth embodiment, an example of an optical layered body having the optical film set according to the second embodiment will be shown. In the fourth embodiment, description of the same member as that in the embodiments that were already described may be omitted.

FIG. 4 is a cross-sectional view illustrating an optical layered body according to the fourth embodiment. Referring to FIG. 4, the optical layered body 4 includes, in this order from the viewing side, the first optical film 10 from which the first release film 19 was peeled off, the liquid crystal cell 30, and the second optical film 20A from which the second release film 29 was peeled off.

That is, the optical layered body 4 is different from the optical layered body 3 (see FIG. 3) in that the second optical film 20 is replaced by the second optical film 20A.

In the first optical film 10, for example, the first glass film 11, the first adhesive layer 12, the first polarizing plate 13, the first phase difference layer 14, and the first gluing agent layer 18 are arranged in this order from the viewing side. In the second optical film 20A, for example, the second gluing agent layer 28, the second phase difference layer 24, the second polarizing plate 23, the second adhesive layer 22, the second glass film 21, and the optical layer 25 are arranged in this order from the viewing side. However, as described above, the first phase difference layer 14, the second phase difference layer 24, and the optical layer 25 may be provided as needed.

Thus, by arranging the first optical film 10 and the second optical film 20A on both sides of the liquid crystal cell 30, the optical layered body 4 is obtained.

As described above, the thickness of the second gluing agent layer 28 is greater than or equal to 50 µm and less than or equal to 200 µm. Thus, in the optical layered body 4, the resistance to cracking of the first glass film 11 can be improved. In particular, when the thickness of the first glass film 11 is 50 µm or more and 150 µm or less, the first glass film 11 is thin and easily broken. Thus, it is highly significant that the thickness of the second gluing agent layer 28 is 50 µm or more and 200 µm or less, thereby improving the resistance to cracking of the first glass film 11.

The optical layered body 4 is preferably configured so that the absorption axis of the first polarizer 131 and the absorption axis of the second polarizer 231 are substantially orthogonal to each other. According to the above-described configuration, the optical layered body 4 with small warpage is obtained.

### [Examples]

In the following, the optical film set and the optical layered body will be described in more detail with reference to examples and comparative examples. However, the present invention is not limited to these examples. In the examples, "parts" and "%" are by weight basis unless otherwise specified.

### [Manufacturing example 1] Preparation of polarizing plate A

A polyvinyl alcohol film (PVA) with a thickness of 100 µm was stretched to 3 times while dyeing for 1 minute in a 0.3% iodine solution at 30°C between rollers with different velocity ratios. Thereafter, a total stretch ratio was increased to 6 times while immersing in an aqueous solution containing 4% boric acid and 10% potassium iodide at 60°C, for 0.5 minutes. Then, the film was washed by immersing in an aqueous solution containing 1.5% potassium iodide at 30°C for 10 seconds. Then, the film was dried at 50°C for 4 minutes, and a polarizer having a thickness of 28 µm was obtained. A saponified triacetyl cellulose film (TAC) having a thickness of 40 µm and an elastic modulus of 3.6 GPa was stuck onto one side surface of the polarizer with a polyvinyl alcohol-based adhesive, and an acrylic resin film having a thickness of 30 µm and an elastic modulus of 2.5 GPa was stuck onto the other side surface of the polarizer with a polyvinyl alcohol adhesive. Thus, a polarizing plate A (thickness: 98 µm) was obtained.

### [Manufacturing example 2] Preparation of polarizing plate B

### (Preparation of polarizer)

First, a layered body, in which a PVA layer having a thickness of 9 µm was formed on an amorphous PET substrate, was subjected to auxiliary in-air stretching at a stretching temperature of 130°C to form a stretched layered body. Subsequently, the stretched layered body was subjected to dyeing to form a dyed layered body, and the dyed layered body was subjected to stretching in an aqueous boric acid solution at a stretching temperature of 65°C to a total stretch ratio of 5.94 times, so that an optical film layered body including the PVA layer having a thickness of 4 µm stretched together with the amorphous PET substrate was obtained.

According to the above-described two-stage stretching, PVA molecules in the PVA layer formed on the amorphous PET substrate were highly oriented, and thereby an optical film layered body including the PVA layer having a thickness of 4 µm and forming a highly-functional polarizer in which iodine adsorbed by the dyeing formed a polyiodide ion complex highly oriented in a single direction was obtained.

### (Preparation of acrylic film)

The methacrylic resin pellet with glutarimide ring units was dried at 100.5 kPa and 100°C for 12 hours, and extruded from a T-die at a die temperature of 270°C in a single shaft extruder to form a film. The film was stretched in the conveying direction (an MD direction) under an atmosphere higher than Tg of the resin by 10°C, and then stretched in the direction perpendicular to the film conveying direction (a TD direction) under an atmosphere higher than Tg of the resin by 7°C, to obtain an acrylic film having a thickness of 40 µm and an elastic modulus of 2.5 GPa.

### (Preparation of curable adhesive)

A curable adhesive was obtained by mixing 35 parts by weight of N-hydroxyethyl acrylamide HEAA (by Kohjin Co., Ltd.), 45 parts by weight of N-acryloyl morpholine ACMO (by Kohjin Co., Ltd.), 25 parts by weight of polypropylene glycol diacrylate TPGDA (Aronix M-220 by Toagosei Co., Ltd.), 3 parts by weight of photopolymerization initiator (Irgacure 184 by Ciba Specialty Chemicals, Inc.), and 1.5 parts by weight of another photopolymerization initiator (KAYACUREDETX-S by Nippon Kayaku Co., Ltd.).

### (Preparation of polarizing plate)

The above-described curable adhesive was applied to the polarizer prepared on the PET film with a coating thickness of about 1 µm. Then, the above-described acrylic film of 40 µm was stuck onto the adhesive layer. The adhesive was irradiated with ultraviolet light from the PET film side by a conveyor type UV irradiator (Fusion Corporation) with peak UV irradiance of 1600 mW/cm², UV cumulative radiation of 1000 mJ/cm² (wavelength within a range from 380 to 440 nm), so that the adhesive was cured, and the adhesive was dried at 70°C for 2 minutes. Finally, the PET film was peeled off from the layered body in which the acrylic film, the polarizer, and the PET film were laminated. Thus, the layered body of the polarizer (polarizer B with a thickness of 44 µm) including the acrylic film (protection film) and the polarizer was obtained.

### [Manufacturing Example 3] Preparation of gluing agent

### (Preparation of Acrylic Polymer)

To a four-mouth flask equipped with a stirring blade, a thermometer, a nitrogen gas introduction tube, and a cooler, 100 parts by weight of butyl acrylate, 5 parts by weight of acrylic acid, 0.075 parts by weight of 2-hydroxyethyl acrylate, 0.2 parts by weight of 2,2'-azobisisobutyronitrile as a polymerization initiator, and 200 parts by weight of ethyl acetate as a polymerization solvent were charged. After performing nitrogen substitution sufficiently, a temperature of the liquid in the flask was kept at around 55°C while stirring the liquid under a stream of nitrogen for 10 hours so that the polymerization reaction was performed, to prepare an acrylic polymer solution. The above-described acrylic polymer had a weight average molecular weight of 2.2 million.

### (Preparation of gluing agent composition)

An acrylic gluing agent (solid content: 10.9% by weight) was prepared by adding to 100 parts by weight of the solid content of the above-described acrylic polymer solution, 0.2 parts by weight of dibenzoyl peroxide (NYPER-BMT by NOF Corporation) as a peroxide, 0.05 parts by weight of diglycidylaminomethylcyclohexane (TETRAD-C by Mitsubishi Gas Chemical Co., Inc.) as an epoxy-based crosslinking agent, 0.1 parts by weight of an adduct of trimethylolpropane/tolylene diisocyanate as an isocyanate-based crosslinking agent (Coronate L by Nippon polyurethane Industry Co., Ltd.), and 0.075 parts by weight of a silane coupling agent (Shin Chemical Industry, KBM403 by Shin-Etsu Chemical Co., Ltd.), and mixing and stirring uniformly.

### [Manufacturing example 4] Preparation of gluing agent

### (Preparation of monomer components for the UV polymerization)

A monomer mixture was prepared by charging 61 parts by weight of 2-ethylhexylacrylate (2EHA), 14 parts by weight of N-vinyl-2-pyrrolidone (NVP), two kinds of photopolymerization initiators, i.e. 0.05 parts by weight of a photopolymerization initiator (Irgacure 184 by BASF SE) and 0.05 parts by weight of a photopolymerization initiator (Irgacure 651 by BASF SE) to a four-mouth flask. Subsequently, the monomer mixture was exposed to ultraviolet light under a nitrogen atmosphere so that the photopolymerization was partially performed. Thus, a partial polymer (acrylic polymer syrup) having a polymerization ratio of about 10% by weight was obtained.

To the total amount of the acrylic polymer syrup (75.1 parts by weight) obtained as above, 3 parts by weight of 2-hydroxyethyl acrylate (2HEA), 22 parts by weight of 4-hydroxybutyl acrylate (HBA), and 0.06 parts by weight of dipentaerythritol pentaacrylate (KAYARAD DPHA by Nippon Kayaku Co., Ltd.) were added, and then these parts were mixed uniformly to prepare a monomer component.

### [Manufacturing Example 5] Preparation of adhesive

### (Preparation of epoxy-based adhesives)

Epoxy-based adhesive was prepared by compounding 70 parts by weight of Celloxide 2021P (Daicel Chemical Industries, Ltd.), 5 parts by weight of EHPE3150, 19 parts by weight of Arone Oxetane OXT-221 (by Toagosei Co., Ltd.), 4 parts by weight of KBM-403 (by Shin-Etsu Co., Ltd.), and 2 parts by weight of CPI101A (by San-Apro Ltd.).

### [Example 1]

### (Preparation of the first optical film A)

A glass film (OA-10G by Nippon Electric Glass Co., Ltd., thickness: 100 µm) was stuck onto the polarizing plate A prepared in Manufacturing example 1 via the adhesive layer including the adhesive prepared in Manufacturing example 5. At this time, the polarizing plate A was arranged so that the acrylic film was on the glass film side. Then, the adhesive layer was irradiated with ultraviolet light (500 mJ/cm²) from a high-pressure mercury lamp, so that the adhesive layer was cured. Thus, the first optical film A was obtained. The adhesive layer had a thickness of 5 µm and an elastic modulus of 1.8 GPa.

### (Preparation of the second optical film A)

The polarizing plate B prepared in Manufacturing example 2 was provided as the second optical film B.

### (Preparation of a layered body A for evaluation)

A glass plate (size of 13.3 inches, i.e. 296 mm × 168 mm; and a thickness of 0.4 mm) was prepared simulating a glass cell.

The first optical film A was cut into pieces of the size of 295 mm × 163 mm with shorter sides parallel to the absorption axes of the polarizers, respectively.

The second optical film B was cut into pieces of the size of 295 mm × 163 mm with longer sides parallel to the absorption axes of the polarizers, respectively.

The first optical film A was laminated on one surface of the above-described glass plate so that the shorter side of the glass plate was parallel to the shorter side of the first optical film A, and the polarizing plate A (polarizer) was arranged on the glass plate side.

The second optical film B was laminated on the other surface of the above-described glass plate so that the shorter side of the glass plate was parallel to the shorter side of the second optical film A, and the polarizer was arranged on the glass plate side.

The first optical film A was laminated on the glass plate via a gluing agent layer (thickness: 20 µm) including the gluing agent prepared in Manufacturing example 3. The gluing agent layer was formed as follows. (i) The acrylic polymer was applied on a silicone-treated polyethylene terephthalate film (by Mitsubishi Chemical Polyester Film, Inc., thickness: 38 µm) and heated at 155°C for 1 minute to form a gluing agent layer having a thickness of 20 µm after drying, and (ii) the gluing agent layer was transferred from the polyethylene terephthalate film to the polarizing plate A, to form a gluing agent layer.

The second optical film B was laminated on the glass plate via the gluing agent layer (thickness of 50 µm) including the gluing agent prepared in Manufacturing example 4. The gluing agent layer was obtained by applying the monomer component prepared in Manufacturing example 4 to a peeling treatment surface of a polyester film (Diafoil MRF by Mitsubishi Plastics, Inc.) having a thickness of 38 µm, one surface of which was subjected to a peeling treatment with silicone, so that the final thickness was 100 µm, to form a coating layer. Then, a polyester film (Diafoil MRE by Mitsubishi Plastics, Inc.) having a thickness of 38 µm, one surface of which was subjected to the peeling treatment with silicone, was overlaid on the surface of the coated monomer component so that the peeling treatment surface of the film faced the coating layer. According to the above-described configuration, the coating layer of the monomer component was blocked from oxygen. The sheet having the coating layer obtained as above was irradiated with ultraviolet light with an illumination of 5 mW/cm² from a chemical light lamp (by Toshiba Corporation) (measured using UVR-T1 by TOPCON Corporation having the maximum sensitivity at about 350 nm) for 360 seconds, and the coating layer was cured to form the gluing agent layer. Thereby, the gluing sheet was prepared. The polyester films coated on both surfaces of the gluing agent layer function as release films.

Subsequently, the polyester film on one surface of the gluing sheet was peeled off, the gluing sheet was laminated on the optical film B, and the other polyester film was peeled off.

As described above, the layered body for evaluation A was prepared.

### [Example 2]

A layered body for evaluation B was prepared in the same manner as Example 1 except that the thickness of the gluing agent layer including the gluing agent prepared in Manufacturing example 4 was 150 µm.

### [Example 3]

A layered body for evaluation C was prepared in the same manner as Example 1 except that the thickness of the gluing agent layer including the gluing agent prepared in Manufacturing example 4 was 200 µm.

### [Example 4]

A layered body for evaluation D was prepared in the same manner as Example 1 except that the thickness of the glass film was 50 µm.

### [Example 5]

A layered body for evaluation E was prepared in the same manner as Example 1 except that the thickness of the glass film was 50 µm and that the thickness of the gluing agent layer including the gluing agent prepared in Manufacturing example 4 was 150 µm.

### [Example 6]

A layered body for evaluation F was prepared in the same manner as Example 1 except that the thickness of the glass film was 50 µm and that the thickness of the gluing agent layer including the gluing agent prepared in Manufacturing example 4 was 200 µm.

### [Comparative example 1]

The second optical film B was laminated on the glass plate via the gluing agent layer (thickness of 20 µm) including the gluing agent prepared in Manufacturing example 3. The gluing agent layer was formed as follows. (i) The acrylic polymer was applied on a silicone-treated polyethylene terephthalate film (by Mitsubishi Chemical Polyester Film, Inc., thickness: 38 µm) and heated at 155°C for 1 minute to form a gluing agent layer having a thickness of 20 µm after drying, and (ii) the gluing agent layer was transferred from the polyethylene terephthalate film to an optical film B, to form a gluing agent layer. Otherwise, a layered body for evaluation G was prepared in the same manner as Example 1.

### [Comparative example 2]

A layered body for evaluation H was prepared in the same manner as Example 1 except that the thickness of the glass film was 50 µm thick and that the gluing agent layer used for the second optical film B was the gluing agent layer (thickness of 20 µm) including the gluing agent prepared in Manufacturing example 3.

### [Comparative example 3]

The layered body for evaluation I was prepared in the same manner as Example 1 except that the thickness of the gluing agent layer including the gluing agent prepared in Example 4 was 250 µm.

### (Evaluation)

For the layered body for evaluation obtained in Examples 1 to 6 and Comparative examples 1 to 3, a ball drop test was performed.

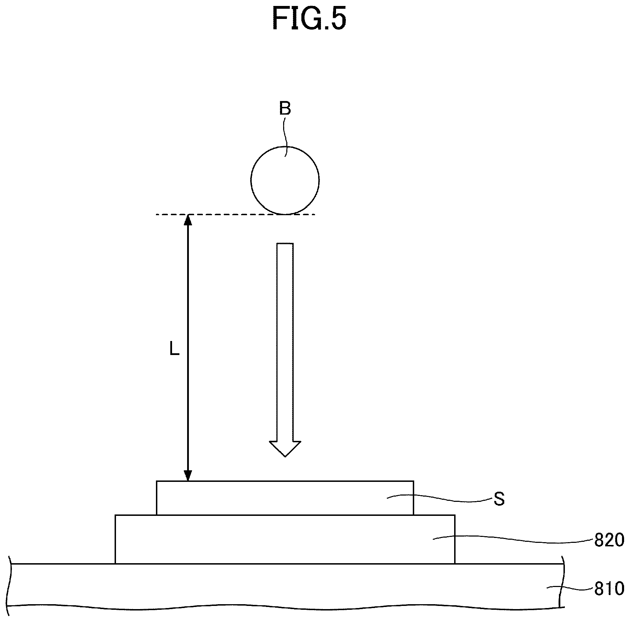

As shown in FIG. 5, the ball drop test is a test in which a layered body for evaluation S (collectively referred to as the layered bodies for evaluation A to I) is placed on a glass plate 820 with a thickness of 10 mm disposed on a measuring table 810, and an iron ball B with a weight of 130 g is dropped from a height L perpendicular to the layered body for evaluation S, to measure the height L at which the glass film of the layered body for evaluation S breaks. The layered body for evaluation S was placed on the glass plate 820 so that the second optical film B was on the glass plate 820 side.

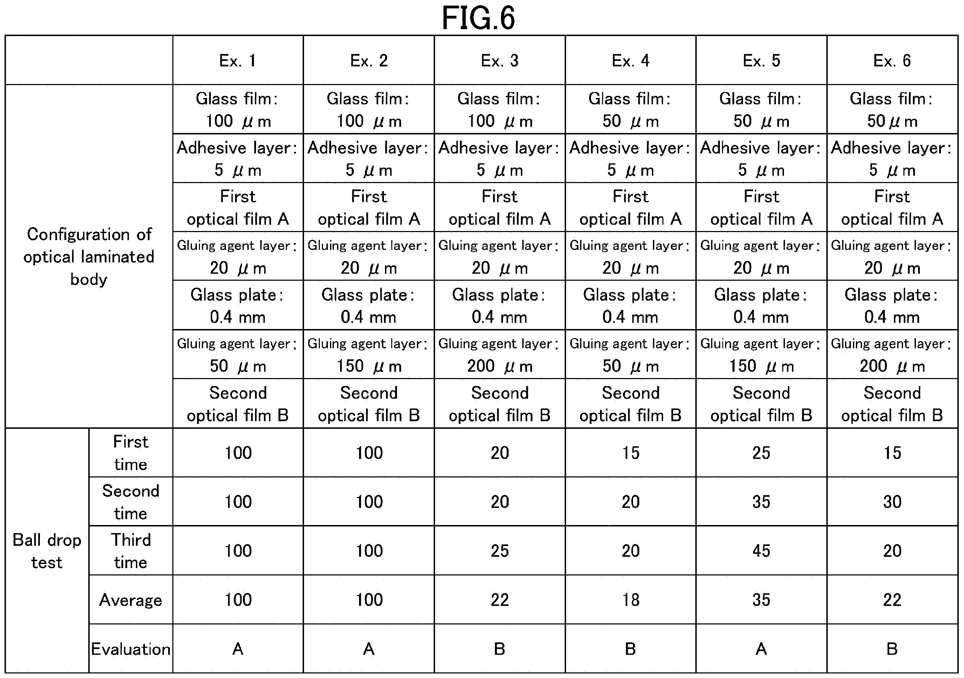

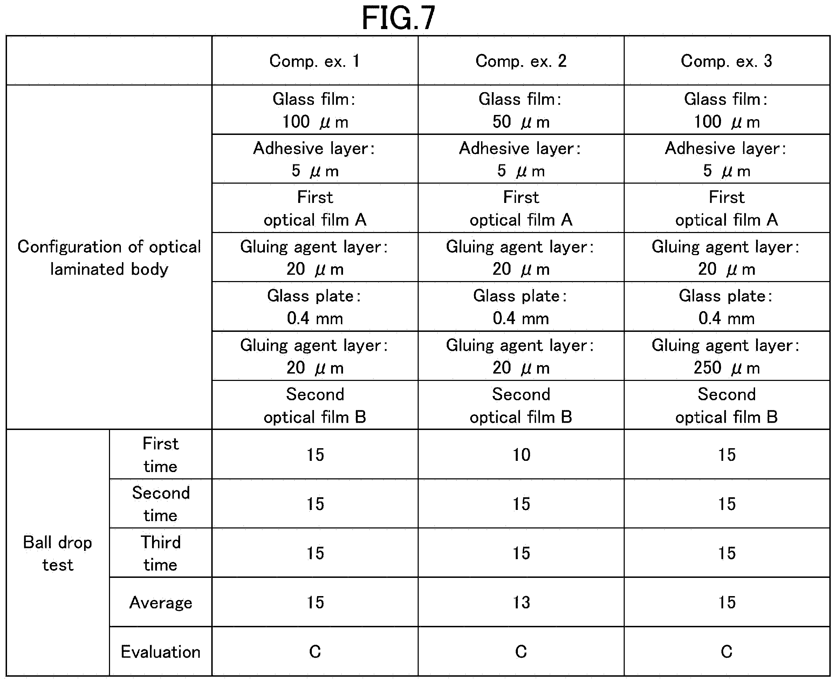

The ball drop test was performed three times for each of the layered bodies for evaluation A to I, to obtain an average of three heights L for breaking the glass film. The evaluation was determined to be "C" (failure) if the average of three heights was less than 17 mm, "B" (pass) if the average of three heights was greater than or equal to 17 mm and less than 34 mm, or "A" (pass) if the average of three heights was greater than or equal to 34 mm. The above-described reference values were set from the inventors' knowledge based on their experiences. Results of the ball drop test are shown in FIGS. 6 and 7. The maximum height L was set to 100 mm, and tests for the height greater than 100 mm were not performed.

As shown in FIGS. 6 and 7, whether the evaluation of the ball drop test was "pass" or "failure" was found to greatly depend on the thickness of the gluing agent layer on the second optical film B side (the gluing agent layer including the gluing agent prepared in Manufacturing example 4), and less depend on the thicknesses of the other layers. In addition, too large and too small thicknesses of the gluing agent layer of the second optical film B side were found to be unpreferable. The thickness of the gluing agent layer of the second optional film B was found to have an optimum value (greater than or equal to 50 µm and less than or equal to 200 µm). The above-described properties had not been known, and were newly found by the inventors.

As described above, it was confirmed that when the thickness of the gluing agent layer on the second optical film B side is 50 µm or more and 200 µm or less, cracking of the glass film can be suppressed regardless of whether the thickness of the glass film is 50 µm or 100 µm.

As described above, preferred embodiments or the like have been described in detail. However, the present invention is not limited to the above-described embodiments or the like, and various modifications and replacements may be made for the above-described embodiments without departing from the scope of the present invention recited in claims.

For example, in the above-described embodiment, the liquid crystal cell 30 in the optical layered body 3 or the like was illustrated. However, in place of the liquid crystal cell 30, an organic Electro-Luminescence (EL) cell, a micro Light Emitting Diode (LED) cell, or the like may be used. For example, when the optical layered body includes an organic EL cell, an anti-reflection film (for anti-glare) may be provided instead of the first polarizing plate 13, and a substrate made of resin may be provided instead of the second polarizing plate 23.

The present international application claims the priority based on Japanese Patent Application No. 2019-066163, filed March 29, 2019, and the entire content of Japanese Patent Application No. 2019-066163 is incorporated herein by reference.

### [Reference signs list]

- 1, 2: Optical film set
- 3, 4: Optical layered body
- 10: First optical film
- 11: First glass film
- 12: First adhesive layer
- 13: First polarizing plate
- 14: First phase difference layer
- 18: First gluing agent layer
- 19: First release film
- 20,20A: Second optical film
- 21: Second glass film
- 22: Second adhesive layer
- 23: Second polarizing plate
- 24: Second phase difference layer
- 25: Optical layer
- 28: Second gluing agent layer
- 29: Second release film
- 30: Liquid crystal cell
- 131: First polarizer
- 132: First projection film
- 231: Second polarizer
- 232: Second protection film

## Claims

1. An optical film set comprising:
a first optical film provided with a first gluing agent layer and disposed on a viewing side of an optical element via the first gluing agent layer; and
a second optical film provided with a second gluing agent layer and disposed on a rear surface side of the optical element via the second gluing agent layer,
wherein a first glass film having a thickness of 50 µm or more and 150 µm or less is disposed on a viewing side surface of the first optical film, and
wherein a thickness of the second gluing agent layer is 50 µm or more and 200 µm or less.

2. The optical film set according to claim 1,
wherein the first optical film includes a first adhesive layer, and a first polarizing plate, which is provided with a first polarizer and a first protection film, sequentially disposed on the optical element side of the first glass film, and
wherein the second optical film includes, a second polarizing plate which is provided with a second polarizer.

3. The optical film set according to claim 2,
wherein the first protection film is disposed on the first adhesive layer side of the first polarizer.

4. The optical film set according to claim 2 or 3,
wherein the first optical film further includes a first phase difference layer.

5. The optical film set according to claim 4,
wherein the first phase difference layer is disposed on a side of the first polarizing plate opposite to the first adhesive layer.

6. The optical film set according to any one of claims 2 to 5,
wherein the second optical film includes a second adhesive layer, and a second glass film, sequentially disposed on a side of the second polarizing plate opposite to the optical element.

7. The optical film set according to claim 6,
wherein the second optical film includes an optical layer disposed on a side of the second glass film opposite to the second adhesive layer.

8. The optical film set according to any one of claims 2 to 7,
wherein the second optical film further includes a second phase difference layer.

9. The optical film set according to any one of claims 2 to 8,
wherein the second optical film further includes an optical layer disposed on at least one side of the second polarizing plate.

10. The optical film set according to any one of claims 2 to 9,
wherein the first polarizing plate has a rectangular shape having a longer side and a shorter side, and
wherein an absorption axis direction of the first polarizer is substantially parallel to the shorter side of the first polarizing plate.

11. The optical film set according to claim 10,
wherein the second polarizing plate has a rectangular shape having a longer side and a shorter side, and
wherein an absorption axis direction of the second polarizer is substantially parallel to the longer side of the second polarizing plate.

12. The optical film set according to any one of claims 2 to 9,
wherein the first polarizing plate has a rectangular shape having a longer side and a shorter side, and
wherein an absorption axis direction of the first polarizer is substantially parallel to the longer side of the first polarizing plate.

13. The optical film set according to claim 12,
wherein the second polarizing plate has a rectangular shape having a longer side and a shorter side, and
wherein an absorption axis direction of the second polarizer is substantially parallel to the shorter side of the second polarizing plate.

14. An optical layered body comprising, in this order, from a viewing side:
the first optical film of the optical film set according to any one of claims 1 to 13;
an optical element; and
the second optical film of the optical film set according to any one of claims 1 to 13.

15. The optical layered body according to claim 14,
wherein the optical element is an in-cell type liquid crystal element.

16. The optical layered body according to claim 14,
wherein the optical layered body is used in an image display device that requires chemical resistance.
